# EUROPEAN PATENT APPLICATION

(11) **EP 3 968 420 A1**
(43) Date of publication of application: **16.03.2022**
(21) Application number: 20315409.1
(22) Date of filing: 14.09.2020
(51) Int. Cl.: H01M 8/04537, H01M 8/04664, H01M 8/04746, H01M 8/04089, H01M 8/04082, B64D 27/24

(54) **ELECTRICAL FAULT PROTECTION SYSTEM FOR FUEL CELL POWER SYSTEMS**

(71) Applicant: Airbus Operations GmbH, 21129 Hamburg (DE)
(72) Inventor: Klewer, Guido, 21129 Hamburg (DE)
(74) Representative: Cabinet Le Guen Maillet

(57) **Abstract**

A protection system (16) intended to protect, against electrical faults, an electrical system being supplied with electrical energy from a fuel cell (12). The fuel cell (12) is supplied by dihydrogen (111) and the protection system (16) comprises: a current sensor (161) configured to measure a current intensity level at output of the fuel cell (12), a controller (162) configured to compare the measured current intensity level with a predefined intensity threshold or with a predefined current profile, and means for controlling supply of the dihydrogen (111). When the measured current intensity level is higher than the predefined intensity threshold or matches the predefined current profile, the controller (162) is configured to send shutting instructions to the means for controlling supply of the dihydrogen (111), which stop supply of dihydrogen (111) to the fuel cell (12) upon reception of the shutting instructions. Thus, prompt reaction to electrical faults, such as short-circuits, is provided at low cost in terms of size and weight.

## Description

### TECHNICAL FIELD

The present invention generally relates to protection systems suitable for protecting fuel cell power systems against electrical faults, such as short-circuits. In at least one embodiment, the present invention relates to protecting electrical systems, such as electrical motors, supplied by fuel cell power systems against electrical faults, such as short-circuits. In at least one embodiment, the present invention relates to protecting such electrical systems in an aircraft.

### BACKGROUND ART

Fuel cells or fuel cells groups are more and more used in electrical power systems in order to supply electrical energy to electrical systems. For instance, such electrical systems are electrical motors used in aircrafts. Such electrical motors receive electrical energy generated by fuel cells or fuel cell groups and transform the electrical energy into mechanical energy. The mechanical energy may then be used by propellers to provide propulsion to the aircraft. Such electrical systems, and particularly electrical motors, need to be protected against electrical faults, such as short-circuits. A general drawback is that fuel cells provide high current and power levels. Circuits breakers suitable for protection at such high current and power levels are however generally too large and too heavy to be easily integrated, for example in an aircraft.

It is desirable to overcome the aforementioned drawbacks of the prior art. It is more particularly desirable to provide a solution that enables protection of an electrical system, such as an electrical motor, against electrical faults, such as short-circuits. It is in addition desirable to provide a space-saving and light solution that can be easily integrated, especially in an aircraft.

### DISCLOSURE OF THE INVENTION

The present invention concerns a protection system intended to protect an electrical system against electrical faults, the electrical system being supplied with electrical energy from a fuel cell and the fuel cell being supplied by dihydrogen. The protection system comprises: a current sensor configured to measure a current intensity level at output of the fuel cell; a controller, connected to the current sensor, configured to compare the measured current intensity level with a predefined intensity threshold or with a predefined current profile over a predefined time period duration, the predefined current profile being representative of an electrical fault; and means for controlling supply of the dihydrogen to the fuel cell, which are connected to the controller. When the measured current intensity level is higher than the predefined intensity threshold or matches the predefined current profile, the controller is configured to send shutting instructions to the means for controlling supply of the dihydrogen to the fuel cell, and the means for controlling supply of the dihydrogen to the fuel cell are configured to stop supply of the dihydrogen to the fuel cell upon reception of the shutting instructions.

Thus, a protection against electrical faults (such as short-circuits) of an electrical system supplied by a fuel cell power system is provided with a prompt reaction time at low cost in terms of size and weight, and which can be easily implemented in an aircraft.

According to a particular feature, the means for controlling supply of the dihydrogen are a controlled valve.

According to a particular feature, the controlled valve comprises a closing mechanism with a spring.

The present invention also concerns a fuel cell power system intended to supply power to an electrical system, wherein the fuel cell power system comprises a fuel cell generating electrical energy from dihydrogen, and the aforementioned protection system which is configured to protect the electrical system against electrical faults, such as short-circuits.

The present invention also concerns a propulsion system that comprises the aforementioned fuel cell power system, wherein the propulsion system further comprises an electrical motor that converts electrical energy generated by the fuel cell power system into mechanical energy, and a propeller receiving the mechanical energy from the electrical motor, wherein the fuel cell power system is configured to protect the electrical motor against electrical faults, such as short-circuits.

The present invention also concerns a vehicle that comprises the aforementioned propulsion system.

The present invention also concerns an aircraft that comprises the aforementioned propulsion system.

### BRIEF DESCRIPTION OF THE FIGURES

The characteristics of the invention will emerge more clearly from a reading of the following description of an example of embodiment, said description being produced with reference to the accompanying drawings, among which:
Fig. 1 schematically represents an aircraft equipped with a fuel cell power system and comprising a protection system designed to protect an electrical system against electrical faults, such as short-circuits according to the present invention, and
Fig. 2 schematically represents the fuel cell power system comprising the protection system of the present invention.

### DETAILED DESCRIPTION OF PREFERRED EMBODIMENTS

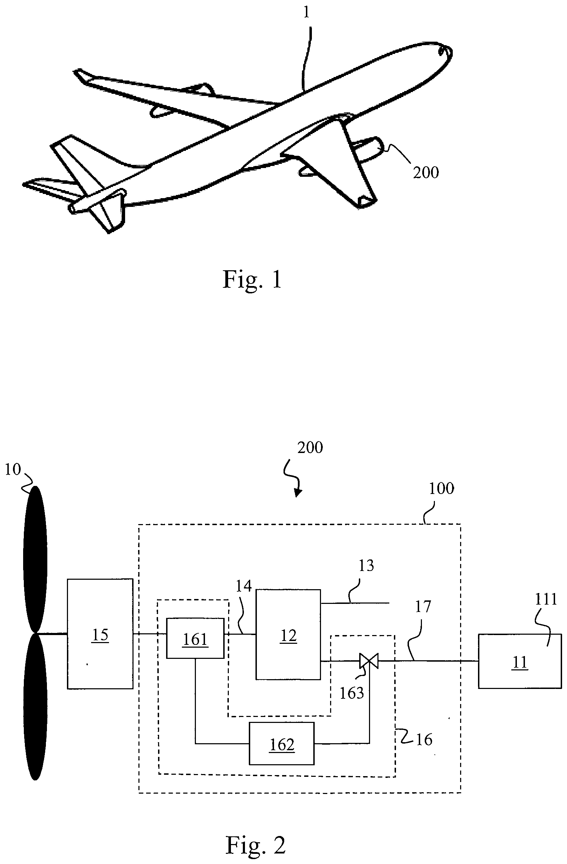

Fig. 1 schematically represents an aircraft 1 equipped with at least one propulsion system 200. One or more of the at least one propulsion system 200 comprises a fuel cell power system 100. The fuel cell power system 100 comprises at least one fuel cell 12 that supplies electrical energy to an electrical motor 15 of the propulsion system (see Fig. 2). The electrical motor 15 converts electrical energy into mechanical energy that is then transferred to a propeller 10. By receiving mechanical energy from the electrical motor 15, the propeller 10 rotates and thus enables propulsion of the aircraft 1. As detailed hereafter, the fuel cell power system 100 further comprises a protection system 16 intended to protect the propulsion system 200 against electrical faults. In a particular embodiment, the protection system 16 is intended to protect the propulsion system at least against short-circuits.

One should note that the fuel cell 12 may be understood as a group of fuel cells.

The propulsion system may alternatively be used by another kind of vehicle, such as a boat or a car.

The fuel cell power system 100 may be integrated in, or connected to, another kind of electrical system than an electrical-motor-based propulsion system, such as for example an Auxiliary Power Unit (APU) on-board the aircraft 1. Other kinds of electrical systems can thus be protected against electrical faults, such as short-circuits, by the protection system 16.

Fig. 2 schematically represents the fuel cell power system 100, including the protection system 16, which is designed to protect the propulsion system 200 against electrical faults, such as short-circuits. In Fig. 2, the fuel cell power system 100 is thus illustratively integrated in the aforementioned propulsion system 200.

Fig. 2 shows the fuel cell 12, the electrical motor 15 and the propeller 10. The fuel cell power system 100 comprises in addition a dihydrogen tank 11 containing dihydrogen 111 used as fuel and connected to the fuel cell 12 by a fuel supply line 17. As shown in Fig. 2, the dihydrogen tank 11 may be outside the fuel cell power system 100 and then connected thereto thanks to the fuel supply line 17. A dioxygen supply line 13 is also connected to the fuel cell 12 in order to supply dioxygen, or air, to the fuel cell 12. In the fuel cell 12, the chemical energy resulting of the reaction of dihydrogen 111 with dioxygen, used as an oxidizing agent, is converted into electrical energy. The electrical energy is then transferred to the electrical motor 15 through an electrical line 14.

The protection system 16 comprises a current sensor 161, a controller 162 connected to the current sensor 161 and means for controlling supply of the dihydrogen 111 which are connected to the controller 162. According to a particular feature, the means for controlling supply of the dihydrogen 111 consist of a valve 163 disposed on the fuel supply line 17. According to a particular feature, the means for controlling supply of the dihydrogen 111 consist of a mass flow controller. The current sensor 161 measures a current intensity level at output of the fuel cell 12, namely on the electrical line 14 between the fuel cell 12 and the electrical motor 15 in the propulsion system 200.

The current sensor 161 provides then in real-time information representative of the measured current intensity level to the controller 162. The controller 162 determines whether or not there is a short-circuit in the propulsion system 200 by comparing the measured current intensity level with a predefined intensity threshold. Below this predefined intensity threshold, it is considered that the electrical motor 15. is safely operated. A short-circuit is detected when the measured current intensity level is higher than the predefined intensity threshold.

In another approach, the controller 162 determines whether or not there is an electrical fault in the propulsion system 200 by comparing the measured current intensity level over a predefined time period duration (sliding window) with a predefined current profile. The predefined current profile is a current shape, over such predefined time period duration, which is representative of an electrical fault (such as ripples from another electrical system). A set of predefined profiles may be used, one profile for each electrical fault from amongst a corresponding set of known electrical faults. Thus, when the measured current intensity level over the predefined time period duration matches the predefined current profile, the controller 162 detects occurrence of an electrical fault.

When an electrical fault, such as a short-circuit, is detected, the controller 162 sends shutting instructions to the means for controlling supply of the dihydrogen 111 (the valve 163 in Fig. 2). By receiving the shutting instructions, the means for controlling supply of the dihydrogen 111 (the valve 163 in Fig. 2) shuts the fuel supply line 17, thus preventing the dihydrogen 111 from flowing into the fuel cell 12. With no dihydrogen supply, the chemical reaction between dihydrogen 111 and dioxygen stops. Consequently, the fuel cell 12 stops providing current and the electrical fault, such as short-circuit, is overcome. Thus, the electrical motor 15, and in general the propulsion system 200, are protected against electrical faults, and more particularly against short-circuits. Shutting supply of the dihydrogen 111 enables a prompt reaction to a detection of presence of an electrical fault, such as a short-circuit.

According to a particular feature, shutting the fuel supply line 17 is performed by closing of the valve 163 thanks to a spring action. The spring is connected to a static component on a first side and to a mobile component on a second side. The mobile component can move from an open position enabling the fuel (dihydrogen 111) to flow though the fuel supply line 17 to a closed position that clogs the fuel supply line 17. As long as the valve 163 remains open, the spring is maintained under tension, or compression, by a holding mechanism and the mobile component is maintained in the open position by the spring. When an electrical fault (such as a short-circuit) is detected, the shutting instructions sent by the controller 162 to the valve 163 require that the holding mechanism releases the tension, or respectively compression, of the spring. The spring release causes the mobile component to move into the closed position, which prevents the fuel (dihydrogen 111) from flowing through the fuel supply line 17. Thus, the valve 163 has a low reaction time thanks to the spring operation and the protection system 16 enables the fuel cell 12 to stop providing current quickly after the controller 162 has detected an electrical fault, such as a short-circuit.

An example of hardware architecture of the controller includes the following components interconnected by a communications bus: a processor, which may also be a microprocessor, a microcontroller or a CPU (Central Processing Unit); a RAM (Random-Access Memory); a ROM (Read-Only Memory); a device adapted to read information stored on a storage medium, such as an SD (Secure Digital) card reader or an HDD (Hard Drive Disk); and a communication interface allowing the controller 162 to receive information from the current sensor 161 and to transmit instructions to the means for controlling supply of the dihydrogen 111 (the valve 163 in Fig. 2).

The processor is capable of executing instructions loaded into the RAM from the ROM or from an external memory, such as an SD card. After the communication device has been powered on, the processor is capable of reading instructions from the RAM and executing these instructions. The instructions form one computer program that causes the processor to perform some or all of the steps and behavior described herein with respect to the controller 162.

Any and all steps and behavior described herein with respect to the controller 162 may be implemented in software by execution of a set of instructions or program by a programmable computing machine, such as a PC (Personal Computer), a DSP (Digital Signal Processor) or a microcontroller; or else implemented in hardware by a machine or a dedicated chip or chipset, such as an FPGA (Field-Programmable Gate Array) or an ASIC (Application-Specific Integrated Circuit).

Thus, thanks to the protection system 16 disclosed above, electrical systems such as electrical motors 15 can be protected against electrical faults, such as short-circuits, in an effective way at low cost and weight. When integrated in the aircraft 1, the protection system 16 is thus space-saving and fuel consumption of the aircraft 1 is improved compared with usage of circuit-breakers.

## Claims

1. A protection system (16) intended to protect an electrical system against electrical faults, the electrical system being supplied with electrical energy from a fuel cell (12) and the fuel cell (12) being supplied by dihydrogen (111), **characterized in that** the protection system (16) comprises:
- a current sensor (161) configured to measure a current intensity level at output of the fuel cell (12),
- a controller (162), connected to the current sensor (161), configured to compare the measured current intensity level with a predefined intensity threshold or with a predefined current profile over a predefined time period duration, the predefined current profile being representative of an electrical fault, and
- means for controlling supply of the dihydrogen (111) to the fuel cell (12), which are connected to the controller (162);
**in that**, when the measured current intensity level is higher than the predefined intensity threshold or matches the predefined current profile, the controller (162) is configured to send shutting instructions to the means for controlling supply of the dihydrogen (111) to the fuel cell (12), and **in that** the means for controlling supply of the dihydrogen (111) to the fuel cell (12) are configured to stop supply of the dihydrogen to the fuel cell (12) upon reception of the shutting instructions.

2. The protection system (16) according to claim 1, wherein the means for controlling supply of the dihydrogen (111) are a controlled valve.

3. The protection system (16) according to claim 2, wherein the controlled valve comprises a closing mechanism with a spring.

4. A fuel cell power system (100) intended to supply power to an electrical system, wherein the fuel cell power system comprises a fuel cell (12) generating electrical energy from dihydrogen (111) and the protection system (16) according to any one of claims 1 to 3 configured to protect the electrical system against electrical faults.

5. A propulsion system (200) that comprises a fuel cell power system, wherein the propulsion system (200) further comprises an electrical motor (15) that converts electrical energy generated by the fuel cell power system (100) into mechanical energy, and a propeller (10) receiving the mechanical energy from the electrical motor (15), wherein the fuel cell power system (100) is according to claim 4 and configured to protect the electrical motor (15) against electrical faults.

6. A vehicle that comprises the propulsion system (200) according to claim 5.

7. An aircraft (1) that comprises the propulsion system (200) according to claim 5.
